# EUROPÄISCHE PATENTSCHRIFT

(11) **EP 0 809 731 B1**
(45) Veröffentlichungstag und Bekanntmachung des Hinweises auf die Patenterteilung: **07.04.1999**
(21) Anmeldenummer: 96904052.6
(22) Anmeldetag: 09.02.1996
(51) Int. Cl.: D21C 5/02, D21F 1/66

(54) **VERFAHREN ZUM WIEDERGEWINNEN VON ROHSTOFFEN AUS EINEM BEI DER PAPIERHERSTELLUNG ANFALLENDEN, ABGEFÜHRTEN REST- ODER FANGSTOFFSTROM UND ANLAGE HIERZU**
PROCESS FOR RECOVERING RAW MATERIALS FROM A FLOW OF RESIDUAL OR COLLECTED MATERIALS DURING PAPER MANUFACTURE AND PLANT THEREFOR
PROCEDE DE RECUPERATION DE MATIERES PREMIERES DANS UN FLUX EVACUE DE MATERIAUX RESIDUAIRES OU COLLECTES LORS DE LA FABRICATION DU PAPIER, ET INSTALLATION UTILISEE A CET EFFET

(30) Priorität: 14.02.1995 DE 19504717; 03.06.1995 DE 19520494
(43) Veröffentlichungstag der Anmeldung: 03.12.1997
(73) Patentinhaber: Julia Innotec GmbH, 44653 Herne (DE)
(72) Erfinder: VALDIVIA, Juan, D-34357 Bad Wildungen (DE); BRAUN, Wolfgang, D-45133 Essen (DE); TRUTSCHLER, Dieter, D-45133 Essen (DE)
(74) Vertreter: Weidener, Jörg Michael, Dipl.-Ing.
(86) Internationale Anmeldenummer: EP9600566
(87) Internationale Veröffentlichungsnummer: WO9625551

(56) Entgegenhaltungen:
- DE-A- 4 334 283
- DE-C- 4 034 054
- US-A- 4 983 258

## Beschreibung

Die Erfindung betrifft ein Verfahren nach dem Oberbegriff des Anspruchs 1 sowie eine Anlage nach dem Oberbegriff des Anspruchs 9.

Die Papierherstellung in einer Papierfabrik erfolgt üblicherweise derart, daß in einer der Papiermaschine vorgeschalteten Stoffaufbereitungsanlage der Papierfabrik aus Frisch- oder Altpapierfasern oder einer Mischung der genannten Fasern ein für die jeweilige Papierproduktion geeigneter Papierrohstoff hergestellt wird. Dieser Papierrohstoff besteht in Abhängigkeit der Qualität des Endproduktes aus einer Mischung von Fasern unterschiedlichster Qualität. Bei der Stoffaufbereitung fällt in der Stoffaufbereitungsanlage und während der Papierherstellung in der Papiermaschine ein Rest- oder Fangstoff im Prozeßwasserstrom an, der unter anderem Grobschmutz, wie Kunststoff- und Metallteile, Fasermaterial, Schwarzpartikel, wie Ruß und Druckfarbenreste, sowie Füllstoffe mit einem großen Anteil an Kaolin, Pigmente, Calciumcarbonat und Titandioxid enthält. Der den Rest- oder Fangstoff enthaltene und von der Papierfabrik abgeführte Prozeßwasserstrom, der im folgenden als Rest- oder Fangstoffstrom bezeichnet wird, ist bisher üblicherweise einer Wasseraufbereitung zugeführt worden. Das dabei gewonnene Filtrat wurde dann zur Papierfabrik zurückgeführt, während der aus der Wasseraufbereitung abgezogene Schlamm entsorgt werden mußte. Bei der vorliegenden Erfindung geht es ausschließlich um den von der Papierfabrik abgeführten Rest- oder Fangstoffstrom.

Bei dem aus der DE 40 34 054 C1 bekannten Verfahren wird der gesamte Rest- oder Fangstoff als Abwasserstrom einer Restabwasserkläranlage zugeführt und gegebenenfalls unter Zuhilfenahme von Flockungsmitteln einer Sedimentation unterzogen. Aus dem Schlammsammelraum der Kläranlage wird dann ein Dünnschlamm abgezogen. Dem Dünnschlamm wird zur Erzielung einer genau bestimmten Konsistenz Restabwasser zugemischt. Anschließend wird der im Rest- oder Fangstoffstrom enthaltene Grobschmutz abgesiebt. Der Siebdurchgang wird zur Abscheidung von Schwarzpartikeln einer Zentrifugieranlage mit einer Vielzahl von Hydrozyklonen zugeführt. Der von den Hydrozyklonen abgegebene Stoffstrom wird sodann einer Siebung zugeführt, in der die Fraktionen Fasern, Agglomerate sowie Pigmente und Füllstoffe gewonnen werden. Die Pigmente und Füllstoffe werden in einem anschließenden Verfahrensschritt voneinander getrennt. Schließlich werden die Fasern, Pigmente und Füllstoffe wieder der Stoffaufbereitung der Papierfabrik zugeführt.

Das bekannte Verfahren hat verschiedene wesentliche Nachteile. Die Kläranlage und die Zentifugieranlage mit den Hydrozyklonen sind sehr aufwendig und kostenintensiv. Darüberhinaus ist der Energiebedarf zum Betrieb der Klär- und insbesondere der Zentrifugieranlage sehr hoch, da sich in den Hydrozyklonen beim Betrieb ein vergleichsweise hoher Druckverlust ergibt. Außerdem ist die genaue Einstellung des den Hydrozyklonen zugeführten Dünnschlammstromes einerseits aufwendig, andererseits aber unerläßlich, da die Hydrozyklone bei von der optimalen Konsistenz abweichender Dünnschlammkonzentration nicht mehr oder nur mit einem geringen Wirkungsgrad betrieben werden können. Die bekannte Anlage ist maßgeblich zum Einsatz in der zellstoffverarbeitenden Industrie ausgelegt, da es sich bei den aus dem Abwasserschlamm gewonnenen Fasern im wesentlichen um Zellstoffasern handelt. Die bekannte Anlage ist nicht zum Einsatz in der auch Altpapier verarbeitenden Industrie ausgelegt, wo die aus dem Rest- oder Fangstoff gewonnene Faserfraktion sehr viel Kurz- und Bruchfasern enthält, was den Einsatz dieser Faserfraktion sehr erschwert und für die meisten Papierfabriken unmöglich macht.

Die Erfindung geht nun einen völlig neuen Weg, der verfahrensmäßig im Patentanspruch 1, vorrichtungsgemäß im Patentanspruch 9 angegeben ist. Bei der Erfindung ist zunächst einmal erkannt worden, daß die Schwarzpartikel zum Teil nur mit sehr geringen Adhäsionskräften an den Fasern und dem Grobschmutz haften. Die Schwarzpartikel können während des Abscheidens der Faserfraktion teilweise sehr leicht von dem Grobschmutz und den Fasern durch auftretende Turbulenzen und den Siebvorgang abgetrennt werden. Es ist daher nicht erforderlich, die Schwarzpartikel in aufwendiger Weise insgesamt vorab abzuscheiden. Durch das Abscheiden der Schwarzpartikel beim Sieben der Fasern wird zum Teil sogar ein höherer Weißheitsgrad der Fasern erreicht als beim Zentrifugieren. Die aufwendige Anlagentechnik beim Stand der Technik zum Vorabscheiden der Schwarzpartikel ist bei der Erfindung nicht erforderlich.

Weiterhin ist bei der Erfindung erkannt worden, daß die Faserfraktion, auch wenn sie hohe Anteile an Kurz- und Bruchfasern enthält, ohne weiteres in besonders wirtschaftlicher Weise genutzt werden kann, wenn die Faser-Fraktion je nach gewünschter Fasergröße in unterschiedliche Faserklassen, beispielsweise in Langfasern, Kurzfasern und/oder Bruchfasern über entsprechende Siebe klassiert wird. Hierdurch entsteht die Möglichkeit, auch in der altpapierverarbeitenden Industrie die gewonnenen Fasern ganz gezielt je nach den Anforderungen des zu erzeugenden Produktes wieder der Produktion zuzuführen. Die von der jeweiligen Papierfabrik nicht zu verwendenden Faserqualitäten bzw. -klassen können zur Herstellung von Papierqualitäten mit anderen Anforderungen an das Endprodukt anderen Papierfabriken oder sonstigen Industriezweigen zugeführt, d.h. verkauft werden.

Ein wesentliche verfahrensmäßige Vereinfachung ergibt sich dann, wenn der von der Stoffaufbereitungsanlage und/oder der Papiermaschine abgeführte Rest- oder Fangstoffstrom direkt bzw. unmittelbar - d.h. ohne Zwischenschaltung einer Klär- oder Wasseraufbereitungsanlage - und insbesondere ohne Voreinstellung der Konsistenz der Anlage zugeführt wird. Darüberhinaus ist nur eine vergleichsweise einfache Anlagentechnik erforderlich.

Verfahrensmäßig bietet es sich außerdem an, wenn aus dem Rest- oder Fangstoffstrom vor der Klassierung der Faser-Fraktion zunächst eine beispielsweise Kunststoffe und/oder Metall enthaltende Grobschmutz-Fraktion durch eine Siebung abgeschieden wird. Anschließend wird die Faser-Fraktion in die gewünschten Faserklassen klassiert. Schließlich kann auch die Abscheidung der Asche-Fraktion ebenfalls über eine Siebung erfolgen. Durch die Verwendung der Siebtechnik zumindest zur Abscheidung bzw. Klassierung des Grobschmutzes und der Faserklassen ist es bei kaskadenartiger Anordnung der entsprechenden Siebe möglich, die Abscheidung bzw. Klassierung und damit die Gewinnung der unterschiedlichsten Faserklassen im wesentlichen unter dem Einfluß der Schwerkraft durchzuführen. Der erforderliche Energieaufwand zur Gewinnung der unterschiedlichen Faserqualitäten wird so auf ein Minimum beschränkt.

Durch die umfassende Behandlung des Rest- oder Fangstoffstroms wird außerdem ein Filtrat mit einer derart hohen Qualität gewonnen, daß eine weitere Wasseraufbereitung nicht erforderlich ist. Das Filtrat, dessen Qualität den jeweiligen Erfordernissen entsprechend einstellbar ist, kann ohne weiteres der Stoffaufbereitungsanlage und/oder der Papiermaschine und/oder dem Rest- oder Fangstoffstrom vor oder/oder in der Anlage wieder zugeführt wird.

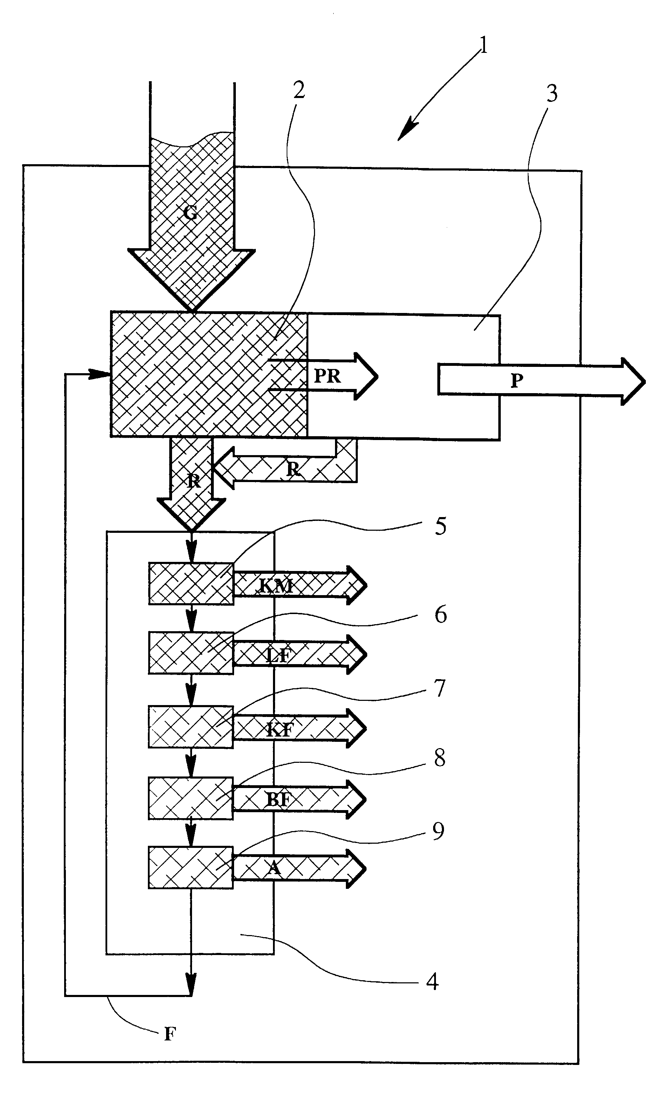

Die einzige Figur zeigt schematisch eine Papierfabrik 1. Die Papierfabrik 1 weist vorliegend eine Stoffaufbereitungsanlage 2 und Papiermaschine 3 auf. Ganz wesentlich ist nun, daß der Papierfabrik 1 eine Anlage 4 zugeordnet, die der Stoffaufbereitungsanlage 2 und auch der Papiermaschine 3 direkt oder unmittelbar nachgeschaltet ist. In dieser Anlage 4 erfolgt eine Behandlung eines von der Stoffaufbereitungsanlage 2 und der Papierherstellungsanlage 3 abgeführten Rest- oder Fangstoffstroms R, wobei unterschiedliche im Rest- oder Fangstoffstrom R enthaltene Stoffe abgeschieden und zumindest zum Teil wiedergewonnen werden.

Die Anlage 4 weist vorliegend fünf Abscheide- bzw. Klassierstufen 5, 6, 7, 8 auf, über die der Rest- oder Fangstoffstrom R nacheinander geführt wird. Es versteht sich, daß eine größere oder kleinere Anzahl von Abscheide- bzw. Klassierstufen ebenfalls möglich ist. Die Anzahl der Abscheide- bzw. Klassierstufen ist vom Einzelfall abhängig und richtet sich einerseits nach den gewünschten, zu gewinnenden Produkten und andererseits nach den gewünschten Qualitäten oder Klassen dieser Produkte. In den Abscheide- bzw. Klassierstufen 5 bis 8 werden vorliegend jeweils Siebe, insbesondere Vibrationssiebe, verwendet. Die Maschenweite des oder der betreffenden Siebe in der Abscheidestufe 5 beträgt etwa 1 bis 2 mm. Die Maschenweite des oder der betreffenden Siebe in der Klassierstufe 6 liegt zwischen 0,5 bis 0,3 mm, in der Klassierstufe 7 zwischen 0,1 und 0,3 mm und in der Klassierstufe 8 zwischen 0,04 und 0,1 mm. Wird in der Abscheidestufe ebenfalls wenigstens ein Sieb verwendet, so liegt die kleinste Maschenweite bei etwa 10 µm. Statt einer Feinst-Sieb-Abscheidung kann in der Abscheidestufe aber auch eine Flotation, Sedimentation und/oder Filtration vorgenommen werden.

Das erfindungsgemäße Verfahren läuft nun wie folgt ab:

Der Stoffmitbereitungsanlage 2 der Papierfabrik 1 wird ein Ausgangs-Papierrohstoff G zugeführt. Hierbei handelt es sich um Altpapier, Zellulose und ggf. weitere Materialien. Den Erfordernissen des jeweils herzustellenden Papiers entsprechend wird der Ausgangs-Papierrohstoff G in der Stoffaufbereitungsanlage 2 in einen Papierrohstoff PR und in den abzuführenden Rest- oder Fangstoffstrom R aufgeteilt. Der Papierrohstoff PR wird der Papiermaschine 3 zugeführt und dort zu Papier P verarbeitet, das dann, wie in der Zeichnung angedeutet, als Produkt die Papierfabrik 1 verläßt. Der Rest- oder Fangstoffstrom R verläßt die Stoffaufbereitungsanlage 2 und wird der Anlage 4 zugeführt. Auch in der Papiermaschine 3 kommt es vorliegend zum Anfall eines Rest- oder Fangstoffstrom R, der der Anlage 4 zugeführt wird.

Es darf an dieser Stelle darauf hingewiesen werden, daß es zwar besonders zweckmäßig ist, den gesamten Rest- oder Fangstoffstrom R im Anschluß an die Stoffaufbereitung/Papierherstellung der Anlage 4 zuzuführen. Allerdings versteht es sich, daß natürlich auch etwaige Teilströme bzw. -mengen des Rest- oder Fangstoffstroms R, die noch nicht den gesamten Prozeß der Stoffaufbereitung/Papierherstellung durchlaufen haben, jedoch mehrere unterschiedliche Stoffen enthalten, ohne weiteres der Anlage 4 zugeführt werden können. Die dargestellte Anordnung hat sich jedoch als die Zweckmäßigste erwiesen, wobei der Rest- der Fangstoffstrom R insgesamt im Anschluß an die Stoffaufbereitungsanlage 2 und die Papiermaschine 3 nicht - wie beim Stand der Technik - einer chemisch-physikalischen Klär- oder Abwasserbehandlungsanlage zugeführt wird, sondern direkt der Anlage 4. Zur Klarstellung darf darauf hingewiesen werden, daß es natürlich möglich ist, der Anlage 4 eine Kläranlage vorzuschalten, die jedoch ihre eigentliche Funktion nicht oder nur unzureichend erfüllt. also quasi wirkungslos oder im wesentlichen wirkungslos gefahren wird. Derartige Ausführungsformen sollen natürlich ebenfalls vom Schutzumfang der Ansprüche erfaßt sein.

Bei der dargestellten Ausführungsform ist bei der Papierherstellung eine erhebliche Menge an Prozeßwasser erforderlich. Die Papierherstellung erfolgt also "naß". Dementsprechend wird der Rest- oder Fangstoffstrom R auch im von der Stoffaufbereitungsanlage 2 abgeführten Prozeßwasser mitgeführt und es erfolgt eine Naß-Abscheidung bzw. -Klassierung in der Anlage 4. Den jeweils gewünschten Anforderungen entsprechend kann in der Anlage 4 eine Dünnstoff-, Mittelstoff- oder Dickstoff-Abscheidung, die auch als Abscheidung im Niedrig-, Mittel- oder Hochkonsistenzbereich bezeichnet werden kann, durchgeführt werden. Bei der Behandlung im Niedrigkonsistenzbereich liegt der Stoffanteil im Prozeßwasser zwischen 0 und 1 %, bei der Behandlung im Mittelkonsistenzbereich zwischen 1 bis 6 % und bei der Behandlung im Hochkonsistenzbereich zwischen 6 und 18 %. Bei Versuchen hat sich herausgestellt, daß es zur Klassierung der Fasern und/oder der Abscheidung der Asche und zum Ablösen der Schwarzpartikel besonders vorteilhaft ist, eine Behandlung im Niedrigkonsistenzbereich durchzuführen, da hierbei eine leichtere Trennung der einzelnen Klassen möglich ist.

Bei der Naß-Abscheidung sind die einzelnen Stufen 5, 6, 7, 8 kaskardenartig hintereinander angeordnet an. Zunächst wird der Rest- oder Fangstoffstrom R der ersten Abscheidestufe 5 zugeführt, wobei Kunststoffe K und Metalle M, aber auch andere Unreinheiten wie Sandkörner, Splitter und dergleichen abgesiebt werden. In der sich daran anschließenden zweiten Klassierstufe 6 werden Langfasern LF, in der dritten Klassierstufe 7 Kurzfasern KF und in der vierten Klassierstufe 8 Bruchfasern BF klassiert. Die Maschenweiten der entsprechenden Siebe der einzelnen Klassierstufen 6, 7, 8 sind zuvor angegeben worden.

In fünften Abscheidestufe 9 wird schließlich Asche A abgeschieden, die Schwarzpartikel, wie Ruß und Druckfarbenreste, sowie Füllstoffe mit einem großen Anteil an Kaolin und außerdem Pigmente enthält und darüberhinaus weitere Stoffe wie Calciumcarbonat und Titandioxid enthalten kann. Die Asche A kann in der fünften Stufe 9 oder im Anschluß daran in mehrere oder alle der genannten Stoffe getrennt werden. Das die fünfte Abscheidestufe 9 verlassende Filtrat F wird wieder der Stoffaufbereitungsanlage 2 direkt zugeführt. Gegebenenfalls kann der Filtratstrom zumindest teilweise auch zur Einstellung der gewünschten Konzentration (Dünnstoff) des Rest-oder Fangstoffstrom R dienen, wenn dieser der Anlage 4 zugeführt wird, oder aber der Papiermaschine zugeführt werden.

Völlig unabhängig davon, wie die Naß-Abscheidung in den Abscheide- bzw. Klassierstufen 5, 6, 7, 8, 9 abläuft, bietet es sich an, noch eine weitere Behandlung bzw. Klassierung der bei der Abscheidung erhaltenen Produkte durchzuführen. So kann beispielsweise die von der Abscheidestufe 5 abgeführte bzw. erhaltene Grobschmutz-Fraktion KM aus Kunststoffen und Metallen nochmals einer Trennung auf einerseits Kunststoffe und andererseits Metalle unterworfen oder aber direkt entsorgt werden. Die in den Klassierstufen 6, 7 und 8 erhaltenen Langfasern LF, Kurzfasern KF und Bruchfasern BF können beispielsweise mit einer Presse eingedickt und/oder getrocknet werden. Anschließend können diese einzelnen Faserklassen wieder als Teil des Ausgangs-Papierrohrstoffs G der Stoffaufbereitungsanlage 2 oder auch einer anderen industriellen Nutzung zugeführt werden. Das in der fünften Abscheidestufe 9 erhaltene Siebgut Asche A wird vorzugsweise in seine zuvor genannten Bestandteile aufgetrennt, was über eine Flotation, Siebung, Sedimentation, Filtration und/oder eine Zentrifugierung erfolgen kann.

Es versteht sich, daß die Behandlung des Rest- oder Fangstoffstrom R in der Anlage 4 nicht notwendigerweise naß erfolgen muß. Natürlich ist auch eine Trocken-Abscheidung möglich. Diese bietet sich insbesondere dann an, wenn der Rest- oder Fangstoffstrom R trocken aus der Stoffaufbereitungsanlage und/oder der Papiermaschine kommt, was bedeutet, daß die Stoffaufbereitung und/oder die Papierherstellung selbst trocken erfolgt. Es ist natürlich auch möglich, den Rest- oder Fangstoff R vor dem Zuführen zur Anlage 4 zu trocknen, wobei er also vom Prozeßwasser aus der Stoffaufbereitungsanlage bzw. der Papiermaschine getrennt wird und als Luft-Rest-oder Fangstoffstrom R der Abscheidung unterzogen wird.

Um die Trocken-Abscheidung in der Anlage 4 durchführen zu können, ist es erforderlich, daß der Rest- oder Fangstoffstrom R pulverisiert wird. Dies kann beispielsweise in einer entsprechenden Mühle geschehen. Der dann pulverisierte Rest- oder Fangstoffstrom R wird anschließend klassiert, wobei die einzelnen zuvor erwähnten Stoffe und Stoffklassen anfallen. Die Klassierung kann beispielsweise über Windsichter, Zentrifugierung, Zyklone, Siebe od. dgl. erfolgen. Da die Abscheidung trocken erfolgt, versteht es sich, daß die Stoffe KM bzw. die Faserklassen LF, KF und BF nicht notwendigerweise einer Nachbehandlung bedürfen. Lediglich bei der Fraktion A mag eine Flotierung und/oder eine andere Behandlung angebracht sein.

## Patentansprüche

1. Verfahren zum Wiedergewinnen von Rohstoffen aus einem mehrere unterschiedliche Stoffe aufweisenden Rest- oder Fangstoffstrom (R), der bei der Herstellung von Papier (P) in einer Papierfabrik (1) und/oder einer Stoffaufbereitungsanlage (2) und/ oder einer Papiermaschine (3) anfällt und von dort abgeführt wird, wobei der Rest-oder Fangstoffstrom (R) einer Anlage (4) zur Abscheidung zumindest einer im Rest-oder Fangstoffstrom (R) enthaltenen Faser-Fraktion über eine Siebung und einer Schwarzpartikel aufweisenden Asche-Fraktion zugeführt wird, **dadurch gekennzeichnet**, daß die Faser-Fraktion je nach gewünschter Fasergröße in wenigstens zwei unterschiedliche Faserklassen, vorzugsweise in Langfasern (LF), Kurzfasern (KF) und/oder Bruchfasern (BF), jeweils über eine Siebung klassiert wird, wobei für jede Faserklasse jeweils eine Sieb-Faser-Klassierstufe vorgesehen ist.

2. Verfahren nach Anspruch 1, dadurch gekennzeichnet, daß die Abscheidung der Faser-Fraktion über die Siebung verfahrensmäßig vor der Abscheidung der die Schwarzpartikel enthaltenden Asche-Fraktion (A) erfolgt.

3. Verfahren nach Anspruch 1 oder 2, dadurch gekennzeichnet, daß der von der Stoffaufbereitungsanlage (2) und/oder der Papiermaschine (3) abgeführte Rest- oder Fangstoffstrom (R) direkt bzw. unmittelbar - d.h. ohne Zwischenschaltung einer Klär-oder Wasseraufbereitungsanlage - und insbesondere ohne Voreinstellung der Konsistenz der Anlage (4) zugeführt wird.

4. Verfahren nach einem der vorhergehenden Ansprüche, dadurch gekennzeichnet, daß aus dem Rest- oder Fangstoffstrom (R) vor der Abscheidung der Faser-Fraktion bzw. -klassen eine beispielsweise Kunststoffe und/oder Metall enthaltende Grobschmutz-Fraktion insbesondere durch eine Siebung abgeschieden wird, daß, vorzugsweise, wenigstens eine der gewonnenen Faserklassen (LF, KF, BF) im Anschluß an die Klassierung eingedickt und/oder getrocknet wird und daß, vorzugsweise, die Abscheidung der Asche-Fraktion (A) über eine Siebung, Flotation, Sedimentation und/ oder Filtration erfolgt.

5. Verfahren nach einem der vorhergehenden Ansprüche, dadurch gekennzeichnet. daß aus der Asche-Fraktion (A) zumindest Pigmente, Füllstoffe und Schwarzpartikel vorzugsweise über eine Flotation und/oder über Hydrozyklone abgeschieden werden, und daß, vorzugsweise, daß die Pigmente, Füllstoffe und/oder Schwarzpartikel nach ihrer Abscheidung klassiert werden.

6. Verfahren nach einem der vorhergehenden Ansprüche, dadurch gekennzeichnet, daß der Rest- oder Fangstoffstrom (R) naß mit einem Stoffanteil von 0 bis 6 Gew.-% im Wasser, vorzugsweise 0 bis 1 Gew.-% der Anlage (4) zugeführt wird.

7. Verfahren nach einem der vorhergehenden Ansprüche, dadurch gekennzeichnet, daß das Filtrat (F) nach der Abscheidung der Asche-Fraktion (A) der Stoffaufbereitungsanlage (2) und/oder der Papiermaschine (3) und/oder dem Rest- oder Fangstoffstrom (R) vor oder/oder in der Anlage (4) und/oder dem Abwasser zugeführt wird.

8. Verfahren nach einem der vorhergehenden Ansprüche, dadurch gekennzeichnet, daß die Siebung des Grobschmutzes und die anschließende Siebung der einzelnen Faserklassen kaskadenartig durchgeführt wird.

9. Anlage (4) zum Wiedergewinnen von Rohstoffen aus einem mehrere unterschiedliche Stoffe aufweisenden Rest- oder Fangstoffstrom (R), der bei der Herstellung von Papier (P) in einer Papierfabrik (1) und/oder einer Stoffaufbereitungsanlage (2) und/ oder einer Papiermaschine (3) anfällt und von dort abgeführt wird, wobei die Anlage (4) wenigstens eine Sieb-Faser-Abscheidestufe (6, 7, 8) aufweist, insbesondere zur Durchführung des vorgenannten Verfahrens, **dadurch gekennzeichnet**, daß in der Sieb-Faser-Abscheidestufe (6, 7, 8) wenigstens zwei Sieb-Faser-Klassierstufen, insbesondere eine Sieb-Langfaser-Klassierstufe (6), eine Sieb-Kurzfaser-Klassierstufe (7) und/oder eine Sieb-Bruchfaser-Klassierstufe (8) vorgesehen sind.

10. Anlage nach Anspruch 9, dadurch gekennzeichnet, daß eine Asche-Abscheidestufe (9) für eine Schwarzpartikel aufweisende Asche-Fraktion (A) der Sieb-Faser-Abscheidestufe (6, 7, 8) nachgeschaltet ist.

11. Anlage nach Anspruch 9 oder 10, dadurch gekennzeichnet daß die Anlage (4) der Stoffaufbereitungsanlage (2) und/oder der Papiermaschine (3) ohne Zwischenschaltung einer Klär- oder Wasseraufbereitungsanlage nachgeschaltet ist.

12. Anlage nach einem der Ansprüche 9 bis 11, dadurch gekennzeichnet, daß eine der Sieb-Faser-Abscheidestufe (6, 7, 8) vorgeschaltete Sieb-Grobschmutz-Abscheidestufe (5) vorgesehen ist, und daß, vorzugsweise, die Asche-Abscheidestufe (9) als Sieb-, Flotations-, Sedimentations- und/oder Filtrations-Abscheidestufe ausgebildet ist.

13. Papierfabrik (1), insbesondere zur Durchführung des Verfahrens nach einem der vorhergehenden Ansprüche, mit einer Stoffaufbereitungsanlage (2) und mit einer Papiermaschine (3), wobei der Stoffaufbereitungsanlage (2) ein Ausgangs-Papierrohstoff (G) zugeführt wird, der Ausgangs-Papierrohstoff (G) in der Stoffaufbereitungsanlage (2) in einen der Papiermaschine (3) zugeführten Papierrohstoff (PR) und einen von der Stoffaufbereitungsanlage (2) und/oder der Papiermaschine (3) abgeführten Rest- oder Fangstoffstrom (R) aufgeteilt wird, und mit einer der Stoffaufbereitungsanlage (2) und/oder einer der Papiermaschine (3) nachgeschalteten Anlage (4) nach einem der vorhergehenden Ansprüche 9 bis 12.

## Claims

1. A process for recovering raw materials from a stream of residual or collected material (R) which comprises a plurality of different materials and which arises during the manufacture of paper (P) in a paper mill (1) and/or in a material processing installation (2) and/or in a paper machine (3) and which is discharged therefrom, wherein the stream of residual or collected material (R) is fed to an installation (4) for separating at least one fibre fraction contained in the stream of residual or collected material (R) via a screening operation and for separating an ash fraction (A) comprising black particles, wherein separation of the fibre fraction via the screening operation is effected, in accordance with the process, before the separation of the ash fraction (A) containing black particles, **characterised in that** the fibre fraction is classified, depending on the desired fibre size, into at least two different classes of fibre, preferably into long fibres (LF), short fibres (KF) and/or broken fibres (BF), by a screening operation in each case, wherein a fibre screening classification stage is respectively provided for each class of fibres.

2. A process according to claim 1, characterised in that separation of the fibre fraction via a screening operation is effected, in accordance with the process, before the separation of the ash fraction (A) containing black particles.

3. A process according to claim 1 or 2, characterised in that the stream of residual or collected material (R) discharged from the material processing installation (2) and/or from the paper machine (3) is fed directly or immediately to the installation (4) - i.e. without the interposition of a clarification or water treatment installation - and in particular without pre-adjustment of the consistency.

4. A process according to any one of the preceding claims, characterised in that a coarse contaminant fraction, which contains plastics and/or metals, for example, is separated from the stream of residual or collected material (R), particularly by a screening operation, before the separation of the fibre fraction or classes of fibres, that at least one of the classes of fibres (LF, KF, BF) obtained is preferably thickened and/or dried following classification, and that separation of the ash fraction (A) is preferably effected by a screening, flotation, sedimentation and/or filtration operation.

5. A process according to any one of the preceding claims, characterised in that pigments, fillers and black particles at least are separated from the ash fraction (A), preferably by a flotation operation and/or via hydrocyclones, and that the pigments, fillers and/or black particles are preferably classified after their separation.

6. A process according to any one of the preceding claims, characterised in that the stream of residual or collected material (R) is fed in a wet state to installation (4), and has a material content of 0 to 6 % by weight in water, preferably 0 to 1 % by weight.

7. A process according to any one of the preceding claims, characterised in that after the separation of the ash fraction (A) the filtrate (F) is fed to the material processing installation (2), and/or to the paper machine (3), and/or to the stream of residual or collected material (R) upstream of and/or in the installation (4), or to the waste water.

8. A process according to any one of the preceding claims, characterised in that the screening of the coarse contaminant and the subsequent screening of the separate classes of fibres is effected in cascade.

9. An installation (4) for recovering raw materials from a stream of residual or collected material (R) which comprises a plurality of different materials and which arises during the manufacture of paper (P) in a paper mill (1) and/or in a material processing installation (2) and/or in a paper machine (3) and which is discharged therefrom, wherein the installation (4) comprises at least one fibre screening separation stage (6, 7, 8), in particular for carrying out the aforementioned process, **characterised in that** at least two fibre screening classification stages, particularly a long fibre screening classification stage (6), a short fibre screening classification stage (7) and/or a broken fibre screening classification stage (8), are provided in the fibre screening separation stage (6, 7, 8).

10. An installation (4) according to claim 9, characterised in that the ash separation stage (9) for an ash fraction (A) containing black particles is disposed downstream of the fibre screening separation stage (6, 7, 8).

11. An installation according to claim 9 or 10, characterised in that the installation (4) is positioned downstream of the material processing installation (2) and/or of the paper machine (3) without the interposition of a clarification or water treatment installation.

12. An installation (4) according to any one of the claims 9 to 11, characterised in that a coarse contaminant screening separation stage (5) is provided upstream of the fibre screening separation stage (6, 7, 8), and that the ash separation stage (9) is preferably constructed as a screening, flotation, sedimentation and/or filtration separation stage.

13. A paper mill (1), particularly for carrying out the process according to any one of the preceding claims, having a material processing installation (2) and having a paper machine (3), wherein a paper raw material feedstock (G) is fed to the material processing installation (2), the paper raw material feedstock (G) is split in the material processing installation (2) into a paper raw material (PR) which is fed into the paper machine (3) and into a stream of residual or collected material (R) which is discharged from the material processing installation (2) and/or from the paper machine (3), and having an installation (4) according to any one of the claims 9 to 12, which is positioned downstream of the material processing installation (2) and/or of the paper machine (3).

## Revendications

1. Procédé pour le recyclage de matières premières à partir d'un courant de matières résiduelles ou de matières prises au piège (R) présentant plusieurs matières différentes, que l'on obtient lors de la fabrication de papier (P) dans une fabrique de papier (1) et/ou dans une installation de préparation de pâte (2) et/ou dans une machine de fabrication du papier (3), et qui est évacué de ces dernières, le courant de matières résiduelles ou de matières prises au piège (R) étant acheminé à une installation (4) pour la précipitation d'au moins une fraction de fibres contenues dans le courant de matières résiduelles ou de matières prises au piège (R), via un criblage, et d'une fraction de cendres présentant des particules noires, caractérisé en ce que la fraction de fibres est classée, en fonction de la dimension respective désirée des fibres, en au moins deux classes de fibres différentes, de préférence en longues fibres (LF), en fibres courtes (KF) et/ou en fibres découpées (BF), respectivement via un criblage, en prévoyant pour chaque classe de fibres respectivement un étage de classement de fibres par criblage.

2. Procédé selon la revendication 1, caractérisé en ce que la précipitation de la fraction de fibres via le criblage a lieu en fonction du procédé avant la précipitation de la fraction de cendres (A) contenant les particules noires.

3. Procédé selon la revendication 1 ou 2, caractérisé en ce que le courant de matières résiduelles ou de matières prises au piège (R) évacué de l'installation de préparation de pâte (2) et/ou de la machine de fabrication de papier (3) est acheminé à l'installation (4) de manière directe, respectivement immédiate-c'est-à-dire sans intercaler une installation de clarification ou de traitement des eaux - et en particulier sans procéder à un préréglage de la consistance.

4. Procédé selon l'une quelconque des revendications précédentes, caractérisé en ce que, à partir du courant de matières résiduelles ou de matières prises au piège (R), avant la précipitation de la fraction de fibres, respectivement des classes de fibres, une fraction de détritus grossiers contenant par exemple des matières synthétiques et/ou des métaux est précipitée en particulier via un criblage; en ce que de préférence au moins une des classes de fibres obtenues (LF, KF, BF) est épaissie et/ou séchée suite au classement; et en ce que de préférence la précipitation de la fraction de cendres (A) a lieu via un criblage, via une flottation, une sédimentation et/ou une filtration.

5. Procédé selon l'une quelconque des revendications précédentes, caractérisé en ce qu'on précipite, à partir de la fraction de cendres (A), au moins des pigments, des matières de charge et ces particules noires de préférence via une flottation et/ou via un hydrocyclone; et en ce que de préférence on classe les pigments, les matières de charge et/ou les particules noires après leur précipitation.

6. Procédé selon l'une quelconque des revendications précédentes, caractérisé en ce qu'on achemine à l'installation (4) le courant de matières résiduelles ou de matières prises au piège (R) à l'état humide avec une fraction de matière de 0 à 6% en poids dans de l'eau, de préférence de 0 à 1% en poids.

7. Procédé selon l'une quelconque des revendications précédentes, caractérisé en ce qu'on achemine le filtrat (F), après la précipitation de la fraction de cendres (A), à l'installation de préparation de pâte (2) et/ou à la machine de fabrication de papier (3) et/ou au courant de matières résiduelles et/ou de matières prises au piège (R) avant et/ou dans l'installation (4) et/ou aux eaux usées.

8. Procédé selon l'une quelconque des revendications précédentes, caractérisé en ce au'on effectue en cascade le criblage des détritus grossiers et le criblage ultérieur des classes de fibres individuelles.

9. Installation (4) pour le recyclage de matières premières à partir d'un courant de matières résiduelles ou de matières prises au piège (R) représentant plusieurs matières différentes, que l'on obtient lors de la fabrication de papier (P) dans une fabrique de papier (1) et/ou dans une installation de préparation de pâte (2) et/ou dans une machine de fabrication du papier (3), et qui est évacué de ces dernières, dans laquelle l'installation (4) présente au moins un étage de précipitation de fibres par criblage (6, 7, 8), en particulier pour la mise en oeuvre du procédé susmentionné, caractérisée en ce qu'on prévoit, dans l'étage de précipitation de fibres par criblage (6, 7, 8), au moins deux étages de classement de fibres par criblage, en particulier un étage de classement de longues fibres par criblage (6), un étage de classement de fibres courtes par criblage (7) et/ou un étage de classement de fibres découpées par criblage (8).

10. Installation selon la revendication 9, caractérisée en ce qu'un étage de précipitation de centres (9) pour une fraction de cendres (A) présentant des particules noires est monté en aval de l'étage de précipitation de fibres par criblage (6, 7, 8).

11. Installation selon la revendication 9 ou 10, caractérisée en ce que l'installation (4) est montée en aval de l'installation de préparation de pâte (2) et/ou de la machine de fabrication de papier (3), sans intercaler une installation de clarification ou de traitement des eaux.

12. Installation selon l'une quelconque des revendications 9 à 11, caractérisée en ce qu'on prévoit un étage de précipitation des détritus grossiers par criblage (5) monté en amont de l'étage de précipitation de fibres par criblage (6, 7, 8) et en ce que, de préférence, on réalise l'étage de précipitation de cendres (9) sous la forme d'un étage de précipitation par criblage, par flottation, par sédimentation et/ou par filtration.

13. Fabrique de papier (1) en particulier pour la mise en oeuvre du procédé selon l'une quelconque des revendications précédentes, comprenant une installation de préparation de pâte (2) et une machine de fabrication du papier (3), dans laquelle une matière brute de papier de départ (G) est acheminée à l'installation de préparation de pâte (2), la matière brute de papier de départ (G) dans l'installation de préparation de pâte (2) est subdivisée en une matière brute de papier (PR) acheminée à la machine de fabrication du papier (3) et en un courant de matières résiduelles ou de matières prises au piège (R) évacué de l'installation de préparation de pâte (2) et/ou de la machine de fabrication de papier (3), ainsi qu'une installation (4) selon l'une quelconque des revendications précédentes 9 à 12, montée en aval de l'installation de préparation de pâte (2) et/ou de la machine de fabrication de papier (3).
